## Europäisches Patentamt
## European Patent Office
## Office européen des brevets

(11) Numéro de publication : **0 004 802**
**B1**

(12) **FASCICULE DE BREVET EUROPÉEN**

(45) Date de publication du fascicule du brevet :
**28.12.83**

(21) Numéro de dépôt : **79400159.4**

(22) Date de dépôt : **09.03.79**

(51) Int. Cl.³ : **H 02 G    1/14**

(54) Nouveau procédé et ensemble de pose d'un manchon élastique de gainage.

(30) Priorité : **11.04.78 FR 7810673**

(43) Date de publication de la demande :
**17.10.79 Bulletin 79/21**

(45) Mention de la délivrance du brevet :
**28.12.83 Bulletin 83/52**

(84) Etats contractants désignés :
**BE CH DE GB IT LU NL**

(56) Documents cités :
**FR-A- 1 321 467**
**FR-A- 2 086 837**
**FR-A- 2 183 912**
**FR-A- 2 234 688**
**NL-A-    292 391**
**US-A- 2 560 369**
**US-A- 2 952 298**
**US-A- 3 513 051**
**IBM TECHNICAL DISCLOSURE BULLETIN vol. 1, no. 2, août 1958, New York (US) A.T. PEDERSEN: "Expansion vacuum tool" page 37**

(73) Titulaire : **SOCIETE INDUSTRIELLE DE LIAISONS ELECTRIQUES - SILEC**
**64 bis, rue de Monceau**
**F-75008 Paris (FR)**

(72) Inventeur : **Chazelas, Elie**
**Rue de L'Eglise**
**Saint Germain Laval F-77130 Montereau (FR)**

(74) Mandataire : **Fruchard, Guy et al**
**NOVAPAT-CABINET CHEREAU 107, boulevard Péreire**
**F-75017 Paris (FR)**

Jouve, 18, rue St-Denis, 75001 Paris, France

## Nouveau procédé et ensemble de pose d'un manchon élastique de gainage

La présente invention concerne un procédé et un dispositif de pose d'un manchon élastique de gainage.

La présente invention vise de façon générale à résoudre le problème du gainage, par un manchon élastique d'élasticité moyenne et relativement long, de l'extérieur d'un cylindre ou de l'intérieur d'un cylindre creux.

Ce problème s'est particulièrement posé à la demanderesse en relation avec le gainage par des manchons élastiques d'extrémités de câble, et l'invention sera plus particulièrement décrite en relation avec la solution de ce problème spécifique mais il convient de souligner qu'elle s'applique au problème général de la connexion de matériels électriques.

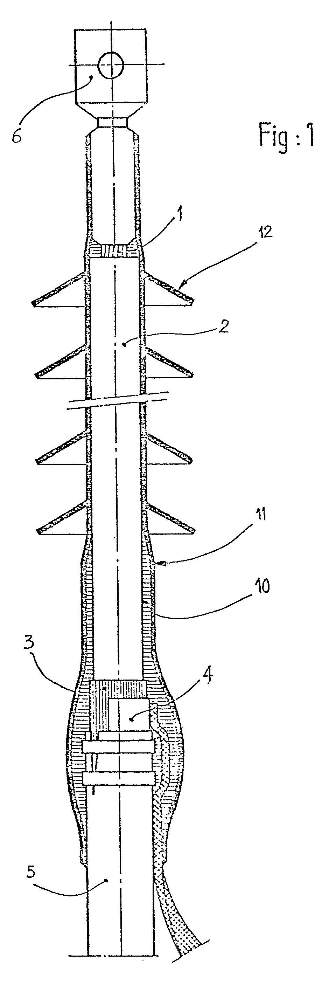

La figure 1 représente une extrémité de câble comprenant une âme toronnée 1, un isolant 2, un écran 3 semi-conducteur (c'est-à-dire en langage de câblier, constitué d'un matériau composite à base de polymère rendu conducteur de l'électricité par du noir de carbone approprié), un recouvrement conducteur 4 tel qu'une bande d'aluminium ou de cuivre, et une gaine isolante 5. Une telle extrémité de câble est par exemple destinée à être reliée à une cosse 6 ; mais il faut noter que la cosse peut être remplacée par un organe de connexion qui permet la jonction avec un autre câble ou la dérivation avec d'autres câbles.

Il est connu dans l'art antérieur qu'il est souhaitable de disposer au voisinage de la zone d'arrêt de l'écran semi-conducteur 3, un produit à résistivité non linéaire 10 et de revêtir l'ensemble d'une gaine isolante 11 comprenant ou non des jupes 12.

A titre d'exemple dimensionnel, on peut indiquer que, pour un câble d'un diamètre de 25 mm, la longueur du manchon isolant 11 doit être d'environ 60 cm.

Dans le cas où le manchon de gainage isolant 11 est un manchon élastique, il n'est pas possible de l'introduire le long de l'extrémité du câble simplement en le faisant glisser car on obtient alors des effets de refoulement, et les diverses couches constituantes du câble peuvent être rebroussées ainsi que le produit à résistance non linéaire 10.

On a donc envisagé, comme cela est connu dans d'autres techniques, de pré-dilater le manchon à l'aide d'un mandrin à trois mors internes déplaçables dans le sens d'un écartement, mais cette solution n'est pas satisfaisante étant données la grande longueur du manchon et les forces considérables qui devraient être exercées pour écarter à priori le manchon avant de l'enfiler ; il est également difficile de retirer les mors tout en positionnant convenablement le manchon qui se rétracte. Ce procédé n'a permis de poser des manchons que par portions élémentaires, par exemple par succession de bagues d'une longueur d'environ 10 cm, ce qui provoque de nombreux inconvénients quant aux mauvaises propriétés d'isolation et d'étanchéité.

On a donc été amené dans l'art antérieur à utiliser essentiellement des manchons en matériau thermorétractable. Ce procédé présente également des inconvénients : notamment, du fait du chauffage de la matière thermorétractable, les couches isolantes sous-jacentes, et en particulier la couche de produit à résistance non linéaire, peuvent être dégradées ou amenées à fluer. En outre, les substances ayant des caractéristiques thermorétractables ne peuvent être choisies librement et n'ont pas de façon générale les caractéristiques d'isolement électrique optimales souhaitées. Ainsi, dans l'art antérieur, dans le cas de l'utilisation de gaines thermorétractables, on était généralement amené à poser une deuxième gaine au-dessus de la première.

Il a également été proposé, comme décrit dans le brevet français 1 321 467, et dans l'IBM Technical Disclosure Bulletin, volume 1, n° 2, août 1958, d'utiliser un appareillage statique pour dilater un manchon contre la paroi interne d'un tube support, en appliquant, entre ces derniers, un vide obtenu par une pompe à vide, ce vide étant maintenu par la pompe lors de la mise en place du câble électrique dans l'appareillage, puis étant interrompu pour permettre au manchon de venir s'appliquer contre le câble.

Ces appareillages présentent les inconvénients, dans un premier temps, de la limitation de l'effort d'application du manchon par le seul vide, puis du maintien du raccordement à la pompe à vide lors des phases de préparation et de mise en place du câble.

La présente invention a précisément pour objet de prévoir un procédé simple et performant de pose d'un manchon de gainage permettant l'utilisation d'un ensemble autonome, éventuellement stockable, d'un tube support avec le manchon maintenu déformé appliqué contre lui, indépendamment de tout raccordement à un autre appareil, et utilisable de ce fait immédiatement et rapidement in situ par un personnel sans qualification particulière.

Pour ce faire, on propose selon une caractéristique de l'invention un procédé de pose sur un corps récepteur sensiblement cylindrique d'un manchon de gainage en un matériau élastique dont l'élasticité travaille dans le sens radial de ce manchon comportant les phases suivantes : a) on applique par déformation radiale le manchon contre un tube support ayant sensiblement la même longueur et dont la paroi présente au moins une ouverture permettant l'échappement de l'air inclus entre le manchon et le tube support, b) on maintient le manchon appliqué sur le tube support sous l'effet de la pression atmosphérique, c) on fait coulisser l'un par rapport à l'autre le tube support et le corps récepteur pour les amener en position de gainage, d) on réintroduit de l'air entre le tube et le manchon de manière à libérer ce dernier et lui permettre de s'appliquer élastiquement contre le corps récepteur, caractérisé en ce qu'on provoque l'échappement de l'air par application sur la face du manchon qui est opposée au tube d'une pression supérieure à la pression atmosphérique, on ferme temporairement la ou les ouvertures pratiquées dans le tube support de manière à maintenir le manchon contre le tube sous l'effet de la pression atmosphérique, on ouvre finalement la ou les ouvertures dans la position de gainage et on dégage les extrémités du manchon de manière à libérer ce dernier.

Ces objets, caractéristiques et avantages de la présente invention ainsi que d'autres seront exposés en détail dans la description suivante de modes de réalisation particuliers faite en relation avec les dessins joints parmi lesquels :

la figure 1 illustre un câble muni d'un manchon de gainage protecteur, cette figure ayant été décrite précédemment pour illustrer les objets de l'invention ;

les figures 2 à 7 illustrent diverses phases de préparation et de pose d'un manchon à la périphérie d'un élément récepteur selon la présente invention ;

les figures 8 et 9 illustrent diverses étapes de préparation et de pose d'un manchon destiné à être appliqué à l'intérieur et d'un élément récepteur creux selon la présente invention ;

les figures 10 à 14 illustrent des formes particulières de manchon selon la présente invention.

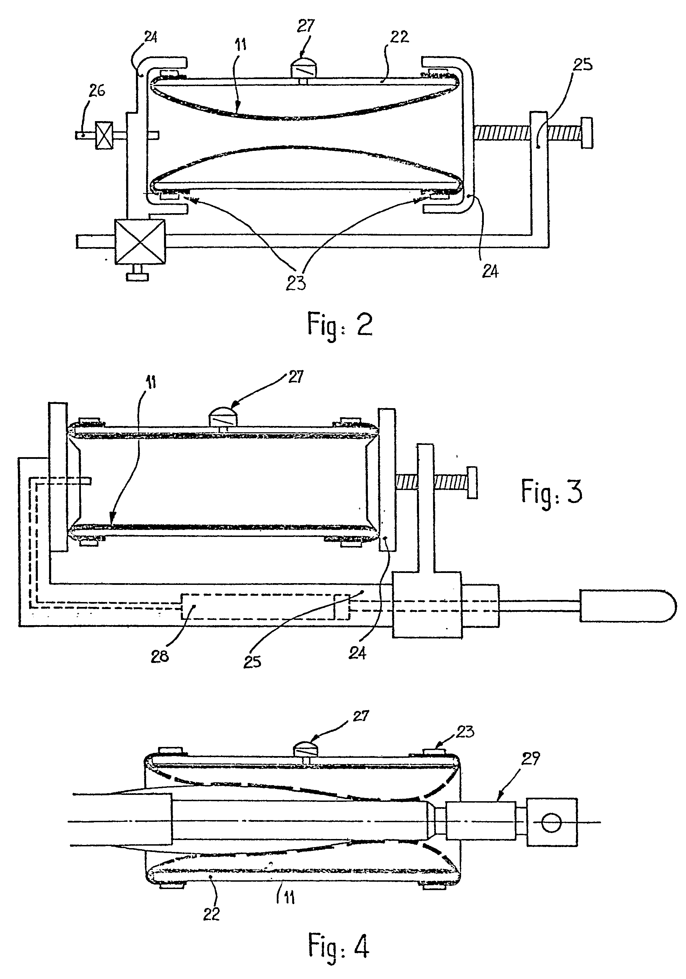

La figure 2 illustre un manchon de gainage 11, destiné à être appliqué à la périphérie externe d'un organe récepteur tel que le câble 30 illustré en figure 4. Le manchon 11 est inséré à l'intérieur d'un tube support creux 22 de diamètre nettement supérieur ayant par exemple une forme cylindrique. Les deux extrémités du manchon sont retroussées vers l'extérieur à chaque extrémité du tube rigide 22 et maintenues en place par deux rondelles 23. Cet ensemble est ensuite placé entre les flasques 24 d'un outil 25 du type serre-joint. Ces flasques 24 assurent une connexion sensiblement étanche avec les extrémités du tube 22 recouvertes d'une portion du manchon de gainage 11. L'un des flasques 24 comprend une valve 26 par laquelle peut être introduit de l'air en surpression, par exemple à l'aide d'un compresseur ou d'une pompe à bicyclette. Le tube comprend plusieurs trous obturables 27. Sous l'effet de la surpression 21, le manchon 11 vient alors s'appliquer contre les parois internes du tube rigide 22, l'air s'échappant par les ouvertures 27. Le manchon 11 prend alors la position illustrée en figure 3. Les ouvertures obturables 27 sont alors bouchées par exemple à l'aide de valves ou tout simplement d'un ruban adhésif étanche. L'outil 25 est enlevé et le manchon élastique 11 reste appliqué en conformation dilatée ou expansée à l'intérieur du tube rigide support 22, l'air ne pouvant plus revenir en raison du bouchage des orifices 27.

La figure 3 représente une variante de l'outil 25 de la figure 2 combinant des flasques d'obturation fixés par un serre-joint et un moyen de gonflage du type pompe à bicyclette 28. Cet outil sera utilisé par exemple pour des applications in situ.

La figure 4 illustre l'application du manchon élastique 11, préalablement appliqué et maintenu par dépression contre le tube support 22, sur une extrémité d'un câble 30. Tout d'abord, le ou les orifices 27 sont libérés de façon à laisser rentrer brutalement ou progressivement de l'air entre le tube support et le manchon élastique. Le manchon tend alors à s'appliquer contre le câble 30 d'abord au niveau de sa partie centrale pour prendre la position représentée en pointillés en figure 4. Ensuite, les extrémités retroussées du manchon élastique sont libérées pour obtenir un produit achevé tel que celui représenté en figure 1. On notera que la libération des extrémités peut se faire ou bien par dégagement des rondelles 23 ou bien par découpe du manchon élastomère au voisinage de l'extrémité du tube support 22 ou bien encore par dégagement des rondelles 23 suivi d'une découpe des extrémités du manchon.

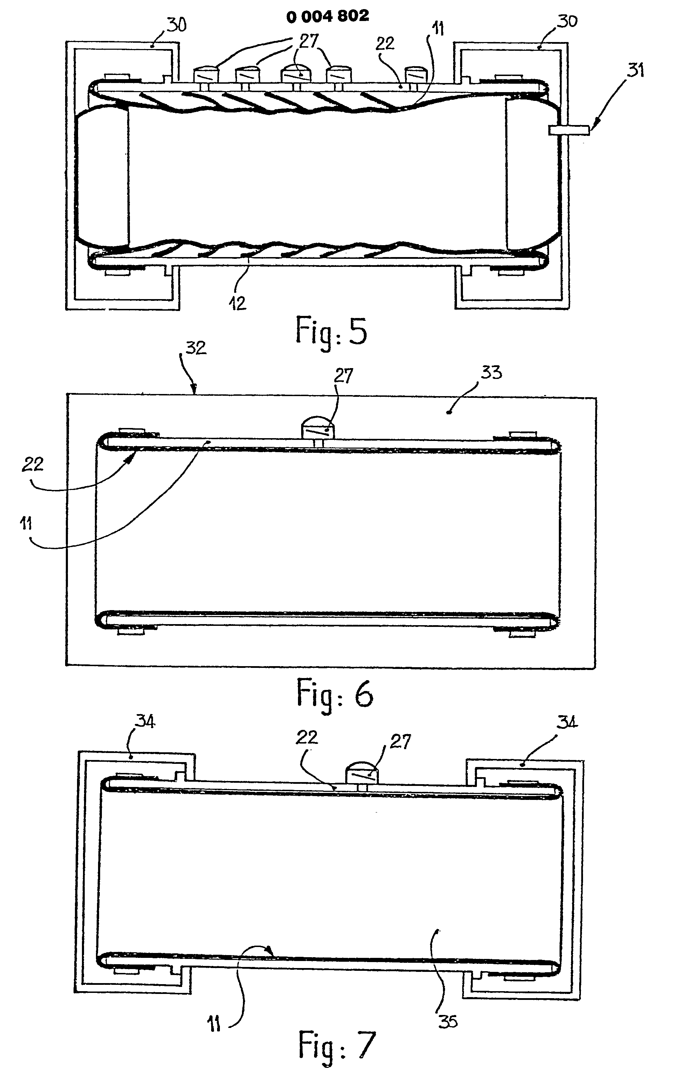

La figure 5 illustre un autre mode de réalisation de la présente invention dans lequel le manchon élastique 11 est muni de jupes ou disques 12. Le tube support 22 peut être lié à des flasques autonomes 30 au lieu d'un outil du type serre-joint comme cela a été illustré précédemment, l'un des flasques 30 étant muni d'un dispositif d'injection d'air 31, du type valve de bicyclette par exemple.

De préférence, le montage d'un manchon élastique sur un tube support selon la présente invention est réalisé en usine et l'application du manchon sur l'élément à gainer est réalisée in situ. En ce cas, il est nécessaire de stocker pendant une certaine durée l'ensemble manchon élastique-tube support, le manchon élastique devant rester appliqué contre le tube support. En fait, il existe toujours des fuites, notamment dans le cas où l'on vise à réaliser un dispositif particulièrement économique et, de toute manière, le manchon élastique est susceptible de présenter une certaine porosité à l'air. On envisage donc, selon la présente invention, comme cela est représenté en figure 6 dans des buts de stockage de disposer l'ensemble manchon élastique-tube support à l'intérieur d'un récipient 32 contenant un liquide neutre 33. Ce récipient peut être un sachet en un complexe aluminium-polyéthylène. Le manchon protecteur élastique reste alors dilaté pendant toute la durée de stockage. A l'utilisation, le sachet est détruit, le liquide jeté et l'ensemble est glissé sur l'objet ou extrémité du câble à gainer. De l'air est alors admis par les ouvertures 27 de la façon exposée précédemment.

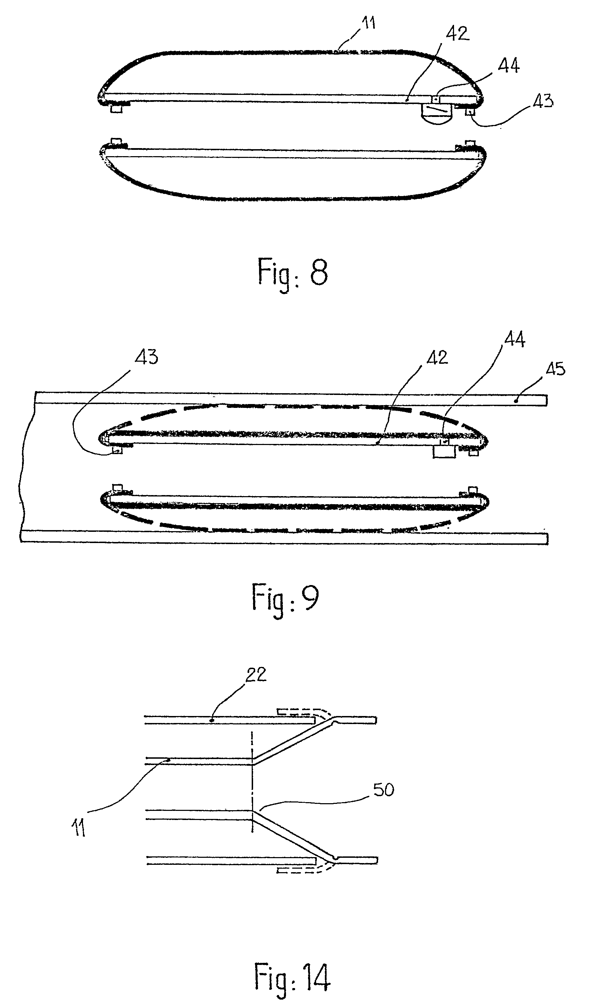

Egalement, dans un but de stockage de longue durée, comme cela est représenté en figure 7, le tube support rigide 22 peut être lié par vissage ou encliquetage à des flasques 34 pour former une enceinte qui est bourrée intérieurement d'un produit pulvérulent ou en grains 35, par exemple du sable fin ou gros, des granulés en matière plastique... A l'utilisation, les flasques ou bouchons 34 seront enlevés, le produit pulvérulent jeté et le manchon mis en place sur l'objet à gainer de la façon exposée précédemment.

Les figures 8 et 9 illustrent un procédé inverse du procédé précédent, dans lequel on veut appliquer un manchon pour gainer l'intérieur d'un tube récepteur et non pas l'extérieur d'un objet cylindrique. Ce mode de réalisation peut notamment être appliqué à la réalisation de joints internes dans des tuyauteries, l'action de tels joints étant renforcée par la surpression existant éventuellement à l'intérieur de la tuyauterie. Egalement, il peut se produire que dans certaines tuyauteries, on souhaite obtenir une isolation interne en certains emplacements, boucher des fissures ou effectuer des raccords. Mais, bien entendu, cette application ne se limite pas au cas de canalisations transférant des liquides. Dans ce mode de réalisation, un tube support 42 de diamètre inférieur à celui du manchon de gainage 11 est prévu. Les extrémités du manchon sont fixées aux extrémités du tube support 42, par exemple à l'aide de rondelles internes 43, mais elles peuvent bien entendu être fixées à l'extérieur du tube support. Ensuite, le manchon 11 est comprimé pour vider la poche d'air comprise entre ce manchon et le tube par l'intermédiaire d'une ouverture obturable 44. Cette évacuation peut s'effectuer, par compression, en prévoyant le montage de l'ensemble tube support-manchon dans un outil approprié, ou encore tout simplement par pression manuelle sur la gaine. Dès que le manchon est appliqué contre le tube support, l'ouverture obturable 44 est bouchée et le manchon se trouve dans la position représentée en trait plein en figure 9. Ensuite, de façon inverse du mode de réalisation précédent, l'ensemble manchon-tube support est introduit à l'intérieur d'un tube 45 à gainer de façon interne ; l'ouverture 44 est libérée pour introduire de l'air entre le manchon et le tube support, de sorte que le manchon vient s'appliquer contre la paroi interne du tube récepteur 45 ; et les joints ou autres moyens de fixation 43 sont enlevés. On notera d'ailleurs, bien que ceci ne soit pas représenté dans la figure, que des moyens d'accès doivent être prévus pour enlever les joints 43 et ouvrir les ouvertures 44 à l'intérieur du tube 45. Ceci peut être effectué par exemple à l'aide de crochets, ou bien les joints 43 et la soupape ou autre moyen d'obturation 44 peuvent être reliés à des prolongateurs s'échappant vers l'extérieur du tube.

L'un des avantages fondamentaux de la présente invention est qu'elle n'impose aucune contrainte sur la nature du matériau constituant le manchon élastique 11, contrairement au cas de l'utilisation de gaines thermorétractables. La composition de ces manchons élastiques peut donc être librement choisie en fonction du problème à résoudre. Notamment dans le cas d'applications électriques, les qualités d'isolant ou de conducteur du manchon de gainage peuvent être librement choisies indépendamment des effets de température.

Dans un mode de réalisation pratique, la demanderesse a réalisé des manchons en élastomères d'une longueur de 60 cm et d'un diamètre interne au repos de 20 mm destinés à gainer des câbles de 25 mm de diamètre, le tube support ayant un diamètre interne de l'ordre de 50 mm, ce qui permet le positionnement facile du tube.

On notera que la gaine élastique, couramment en élastomère, n'a pas nécessairement une forme cylindrique droite régulière, mais peut avoir une forme complémentaire de l'élément récepteur auquel elle est destinée, par exemple un raccord entre deux cylindres de sections différentes. Dans ce cas, le tube support aura de préférence une forme complémentaire de celle du manchon de gainage.

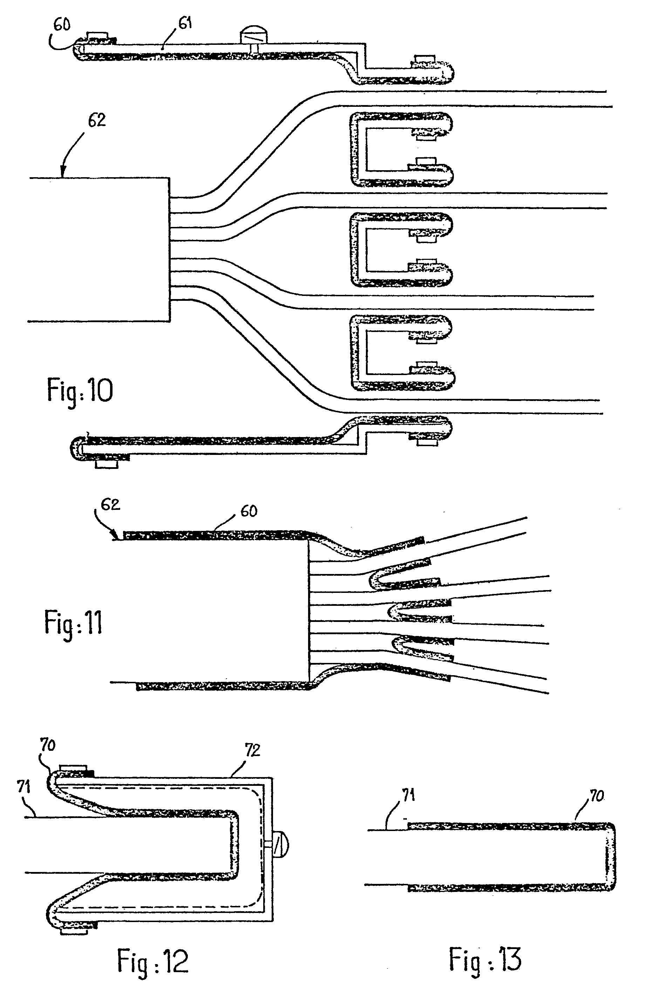

Ainsi, la figure 10 représente un manchon 60 disposé sur un support 61 pour être posé sur une extrémité de câble à plusieurs conducteurs 62. Le manchon 60 a en quelque sorte la forme d'un gant à doigts percés et le support 61 a une forme correspondante. La figure 11 représente le manchon posé sur un câble. Les figures 12 et 13 illustrent la pose d'une gaine formant capot 70 sur une extrémité de cylindre 71 à l'aide d'un tube support 72. Il ne s'agit là que d'exemples des diverses formes de manchons et de tubes supports qui peuvent être utilisées selon la présente invention pour résoudre des problèmes spécifiques.

D'autre part, selon une variante de réalisation, l'extrémité du manchon de gainage peut avoir la forme illustrée en figure 14 pour faciliter son montage initial et le retroussement de ses extrémités sur le tube support 22. En ce cas, après montage de la gaine élastique sur l'élément récepteur final, celle-ci sera découpée au voisinage de l'emplacement indiqué par le trait en pointillés 50.

Dans le cas d'une application au gainage d'une extrémité de câble, le manchon pourra prendre la forme d'un tube lisse ou d'un tube muni de disques ou juges formant isolateur réalisé à partir de produits élastomères à bas module d'élasticité, à savoir : caoutchoucs, naturels et synthétiques, élastomères de silicone, élastomères à base de butyle, de polychloroprène, élastomères EPDM ou EPR, polyéthylène chlorosulfoné, fluoroélastomère, etc...

Toujours dans le cas du gainage d'une extrémité du câble, ce gainage pourra être effectué au-dessus d'un produit à résistance non linéaire tel que le produit 10 illustré en figure 1, ce produit étant de préférence peu susceptible de goutter ou de fluer par suite du serrage du manchon. Le produit à résistance non linéaire peut également être initialement collé à l'intérieur du manchon élastique, ce produit suit alors la dilatation du manchon au moment du gonflage, puis est reformé sur le câble au moment du dégonflage. D'autre part, le produit constituant le manchon élastomère lui-même peut contenir à un niveau souhaité un matériau lui donnant une caractéristique de résistance non linéaire.

Le tube support selon la présente invention qui permet l'expansion et le maintien dilaté du manchon de gainage élastique est réalisé dans des dimensions appropriées sans limitation de diamètre ni de longueur d'une manière compatible avec une manipulation facile manuellement ou à l'aide d'un outil, de palan, etc... Ce tube support peut être réalisé en matériaux classiques et connus tels que du fer, de l'acier, de l'acier inoxydable, de l'aluminium, du cuivre et leurs alliages, des matières plastiques, des élastomères renforcés et stratifiés, du verre et des tissus imprégnés de résine durcissant à chaud et à froid, etc...

L'obturation pour la mise sous pression initiale peut s'effectuer à l'aide de flasques vissés ou fixés rapidement sur le tube support à l'aide d'attaches rapides, de boulons et écrous à papillons, ou maintenus par un outil du genre serre-joint.

D'autre part, bien que l'on ait essentiellement décrit ici l'application du manchon de gainage contre le tube support par formation d'une surpression, cette application peut être réalisée par tout autre moyen par exemple par contrainte mécanique. On peut aussi envisager que le maintien du manchon contre le tube support soit assuré par des moyens autres que la pression atmosphérique, par exemple par collage à l'aide d'une colle facilement dissolvable in situ ou dont l'effet d'adhérence est supprimé par une légère augmentation de température, les caractéristiques fondamentales de la présente invention étant telles que définies dans la revendication 1 ci-après.

La présente invention n'est pas limitée aux exemples de réalisation qui viennent d'être décrits, elle est au contraire susceptible de variantes et de modifications qui apparaîtront à l'homme de l'art.

## Revendications

1. Procédé de pose sur un corps récepteur sensiblement cylindrique d'un manchon de gainage en un matériau élastique dont l'élasticité travaille dans le sens radial de ce manchon comportant les phases suivantes :

a) on applique par déformation radiale le manchon contre un tube support ayant sensiblement la même longueur et dont la paroi présente au moins une ouverture permettant l'échappement de l'air inclus entre le manchon et le tube support,

b) on maintient le manchon appliqué sur le tube support sous l'effet de la pression atmosphérique,

c) on fait coulisser l'un par rapport à l'autre le tube support et le corps récepteur pour les amener en position de gainage,

d) on réintroduit de l'air entre le tube et le manchon de manière à libérer ce dernier et lui permettre de s'appliquer élastiquement contre le corps récepteur,

caractérisé en ce qu'on provoque l'échappement de l'air par application sur la face du manchon qui est opposée au tube d'une pression supérieure à la pression atmosphérique, on ferme temporairement la ou les ouvertures (27, 44) pratiquées dans le tube support de manière à maintenir le manchon contre le tube sous l'effet de la pression atmosphérique, on ouvre finalement la ou les ouvertures dans la position de gainage et on dégage les extrémités du manchon de manière à libérer ce dernier.

2. Procédé selon la revendication 1, caractérisé en ce que le tube support avec le manchon appliqué contre lui est maintenu stocké après l'étape de fermeture de l'ouverture dans une enceinte remplie d'un matériau liquide ou d'un produit pulvérulent, pour être ultérieurement amené en position de gainage sur l'élément récepteur après extraction hors du matériau liquide ou du produit pulvérulent.

3. Procédé selon l'une des revendications 1 ou 2, caractérisé en ce que le manchon est destiné à gainer la périphérie externe d'un élément récepteur tel qu'un câble et est appliqué de façon dilatée à l'intérieur du tube support qui a une dimension supérieure à celle de l'élément récepteur.

4. Procédé selon l'une des revendications 1 ou 2, caractérisé en ce que le manchon est destiné à gainer la périphérie interne d'un élément récepteur creux tel qu'un tube et est appliqué de façon contractée à l'extérieur d'un tube support de dimension inférieure à celle de l'élément récepteur creux.

5. Procédé selon l'une quelconque des revendications précédentes, caractérisé en ce que le fluide sous pression est appliqué par un dispositif générateur de pression à main (28).

6. Procédé selon l'une quelconque des revendications précédentes, caractérisé en ce que pour appliquer le manchon sur le tube support, les extrémités du manchon sont préalablement fixées de façon libérable aux extrémités longitudinales du tube support.

7. Procédé selon la revendication 6, caractérisé en ce que les extrémités du manchon élastique sont retournées autour des extrémités du tube support et fixées de façon libérable à celles-ci.

8. Procédé selon l'une quelconque des revendications 1 à 7, caractérisé en ce que l'ouverture obturable est munie d'une valve.

9. Procédé selon l'une quelconque des revendications 1 à 7, caractérisé en ce que l'ouverture obturable est obturée à l'aide de ruban adhésif étanche.

## Claims

1. A process for laying on a substantially cylindrical receiving body a sheathing sleeve comprising a flexible material, the resiliency of which acts in the radial direction thereof, including the following steps :

a) said sleeve is applied by being radially distorted against a support tube of substantially the same length, the wall of which is provided with at least an aperture for venting air enclosed between sleeve and support tube,

b) said sleeve is maintained in such an applied position against support tube by means of atmospheric pressure,

c) support tube and receiving body are slindingly moved one with respect to the other in order to bring them in a position ready for sheathing,

d) air is re-admitted between tube and sleeve so that the latter may release, thereby allowing it to be resiliently applied on receiving body, wherein air venting is carried out by submitting sleeve face disposed opposite to tube to a pressure above atmospheric pressure ; said aperture(s) (27, 44) provided in support tube is temporarily closed so that atmospheric pressure keeps sleeve against tube ; finally said aperture(s) is opened into the sheathing position, and sleeve ends are disengaged so that the sleeve release may take place.

2. A process as recited in claim 1, wherein support tube with said sleeve applied against it is kept stored after the aperture closing step inside an enclosure filled with a liquid material or a powdery product, in order to be set at a later stage in a sheathing position onto receiving member after removal from liquid material or powdery product.

3. A process as recited in claim 1 or 2, wherein said sleeve is adapted to sheath the external periphery of a receiving member such as a cable and applied in an expanded state inside support tube, the dimensions of which are larger than that of said receiving member.

4. A process as recited in claim 1 or 2, wherein said sleeve is adapted to sheath the internal periphery of a hollow receiving member such as a tube and applied in a shrinked state outside a support tube, the dimensions of which are smaller than that of said hollow receiving member.

5. A process as recited in any preceding claim, wherein the pressurized fluid is introduced by a manual pressure generating device (28).

6. A process as recited in any preceding claims, wherein in order to apply said sleeve against support tube, sleeve ends are previously movably attached to the longitudinal ends of support tube.

7. A process as recited in claim 6, wherein resilient sleeve ends are turned over around support tube ends and movably attached to the latter.

8. A process as recited in any preceding claim, wherein said sealable aperture is provided with a valve.

9. A process as recited in any claims 1-7, wherein said sealable aperture is sealed by means of a tight adhesive tape.

**Ansprüche**

1. Verfahren zum Aufbringen einer Schutzhülle aus elastischem Material, deren Elastizität in Radialrichtung der Hülle wirkt, auf einen im wesentlichen zylindrischen Aufnahmekörper, mit den folgenden Verfahrensschritten :

a) Anlegen der Hülle durch radiale Verformung an ein Halterohr, das im wesentlichen die gleiche Länge aufweist und dessen Wand wenigstens eine Öffnung aufweist zur Abfuhr von Luft, die zwischen der Hülle und dem Halterohr eingeschlossen ist,

b) Halten der an das Halterohr angelegten Hülle durch den Einfluß des atmosphärischen Drucks,

c) Verschieben des Halterohrs und des Aufnahmekörpers relativ zueinander, um sie in Aufnahmestellung zu bringen,

d) Einlassen von Luft zwischen Rohr und Hülle um letztere zu lösen, so daß sie sich elastisch am Aufnahmekörper anlegen kann, dadurch gekennzeichnet, daß der Luftaustritt durch Beaufschlagen der Seite der Hülle erfolgt, die dem Rohr entgegengesetzt ist, mit einem Druck, der größer als der atmosphärische Druck ist, daß zeitweise die Öffnung oder die Öffnungen (27, 40) im Halterohr derart verschlossen werden, daß die Hülle am Rohr unter dem Einfluß des atmosphärischen Drucks anliegt, daß schließlich die Öffnung oder die Öffnungen zum Aufbringen geöffnet werden und daß die Enden der Hülle frei gemacht werden, so daß diese gelöst wird.

2. Verfahren nach Anspruch 1, dadurch gekennzeichnet, daß das Halterohr mit der anliegenden Hülle nach dem Verschließen der Öffnung in einem Behälter gelagert wird, der mit einem flüssigen Material oder einem pulverförmigen Produkt gefüllt ist, um schließlich in die Aufnahmestellung am Aufnahmekörper gebracht zu werden, nach der Herausnahme aus dem flüssigen Material oder dem pulverförmigen Produkt.

3. Verfahren nach einem der Ansprüche 1 oder 2, dadurch gekennzeichnet, daß die Hülle dazu bestimmt ist, den Außenumfang eines Aufnahmekörpers wie z. B. eines Kabels zu bedecken und daß sie in gedehnter Form im Inneren des Halterohrs anliegt, welches eine Abmessung aufweist, die größer als diejenige des Aufnahmekörpers ist.

4. Verfahren nach einem der Ansprüche 1 oder 2, dadurch gekennzeichnet, daß die Hülle dazu bestimmt ist, den Innenumfang eines hohlen Aufnahmekörpers wie eines Rohrs zu bedecken und daß sie in zusammengedrückter Form außen auf einem Halterohr anliegt, dessen Abmessung kleiner als diejenige des hohlen Aufnahmekörpers ist.

5. Verfahren nach einem der vorhergehenden Ansprüche, dadurch gekennzeichnet, daß das Druckfluid durch eine manuelle Druckerzeugungsvorrichtung (28) geliefert wird.

6. Verfahren nach einem der vorhergehenden Ansprüche, dadurch gekennzeichnet, daß zum Anlegen der Hülle auf das Halterohr die Enden der Hülle lösbar mit den Längsenden des Halterohrs verbunden werden.

7. Verfahren nach Anspruch 6, dadurch gekennzeichnet, daß die Enden der elastischen Hülle um die Enden des Halterohrs geschlungen sind und lösbar mit diesen verbunden sind.

8. Verfahren nach einem der Ansprüche 1 bis 7, dadurch gekennzeichnet, daß die verschließbare Öffnung mit einem Ventil versehen ist.

9. Verfahren nach einem der Ansprüche 1 bis 7, dadurch gekennzeichnet, daß die verschließbare Öffnung mit Hilfe eines dicht haftenden Klebebandes verschlossen ist.

Fig : 1

Fig. 2

Fig. 3

Fig. 4

Fig. 5

Fig. 6

Fig. 7

3

Fig: 8

Fig: 9

Fig: 14

4

0 004 802

Fig : 10

Fig : 11

Fig : 12

Fig : 13